# FASCICULE DE BREVET EUROPEEN

(11) **EP 4 093 992 B1**
(45) Date de publication et mention de la délivrance du brevet: **04.03.2026**
(21) Numéro de dépôt: 21704852.9
(22) Date de dépôt: 11.01.2021
(51) Int. Cl.: F16H 57/08

(54) **PORTE-SATELLITES POUR UN REDUCTEUR MECANIQUE DE TURBOMACHINE D'AERONEF**
PLANETENTRÄGER FÜR EIN MECHANISCHES UNTERSETZUNGSGETRIEBE EINER FLUGZEUGTURBOMASCHINE
PLANET CARRIER FOR A MECHANICAL REDUCTION GEAR OF AN AIRCRAFT TURBOMACHINE

(30) Priorité: 21.01.2020 FR 2000583
(43) Date de publication de la demande: 30.11.2022
(73) Titulaire: Safran Transmission Systems, 92700 Colombes (FR)
(72) Inventeur: SIMON, Adrien Louis, 77550 MOISSY-CRAMAYEL (FR); LAISNEZ, Frederic Nicolas François, 77550 MOISSY-CRAMAYEL (FR); MOULY, Guillaume Pierre, 77550 MOISSY-CRAMAYEL (FR)
(74) Mandataire: Gevers & Orès
(86) Numéro de dépôt international: PCT/FR2021/050030
(87) Numéro de publication internationale: WO 2021/148736

(56) Documents cités:
- JP-A- 2005 351 294
- JP-A- 2009 030 749
- JP-B2- 4 631 323
- US-A- 3 939 736

## Description

### Domaine technique de l'invention

La présente invention concerne le domaine des réducteurs mécaniques pour des turbomachines en particulier d'aéronef, et en particulier les réducteurs équipés de satellites à double étage d'engrènement.

### Arrière-plan technique

L'état de l'art comprend notamment les documents WO-A1-2010/092263, FR-A1-2 987 416, FR-A1-3 011 901, FR-A1-3 041 054 et FR-A1-3 058 493. Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent et sont équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés de un ou plusieurs étages d'engrènement. Cet engrènement est assuré de différentes façons comme par contact, par friction ou encore par champs magnétique.

Dans la présente demande, on entend par « étage » ou « denture », une série de dents d'engrènement avec une série de dents complémentaires. Une denture peut être interne ou externe.

Un satellite peut comprendre un ou deux étages d'engrènement. Un satellite à simple étage comprend une denture qui peut être droite, hélicoïdale ou en chevron et dont les dents sont situées sur un même diamètre. Cette denture coopère à la fois avec le solaire et la couronne.

Un satellite à double étage comprend deux dentures ou deux séries de dents qui sont situées sur des diamètres différents. Une première denture coopère avec le solaire et une seconde denture coopère avec la couronne.

Une des problématiques d'un réducteur mécanique concerne le risque de désalignements des satellites. Cette problématique est amplifiée dans le cas de satellites à double étage car les reprises d'effort dans le porte-satellites sont plus complexes du fait que les dentures sont situées dans deux plans différents perpendiculaires à l'axe du porte-satellites.

Il existe donc un besoin de modifier le chemin d'effort dans le porte-satellites afin de limiter le risque de désalignements des satellites. Une solution consistant à rigidifier le porte-satellites serait envisageable mais se traduirait par une augmentation de sa masse ou de son encombrement, ce qui serait désavantageux.

Un porte-satellites destiné à être mobile en rotation comprend une cage de logement de satellites qui est reliée à un arbre ou une portion d'arbre pour son entrainement en rotation. Lorsque la portion d'arbre est indépendante du porte-satellites, elle est en général accouplée à la cage par l'intermédiaire de cannelures, une extrémité de la portion d'arbre pouvant être engagée dans un orifice central de la cage, comme décrit dans les documents JP-A-2009 030749, JP-A-2005 351294 et JP-B2-4 631323. Au contraire, la présente invention concerne un porte-satellites dont la cage et la portion d'arbre sont formées d'une seule pièce, et propose une solution d'optimisation technique de ce type de porte-satellites.

### Résumé de l'invention

L'invention concerne un porte-satellites pour un réducteur mécanique de turbomachine, en particulier d'aéronef, ce porte-satellites étant configuré pour être un organe mobile en rotation du réducteur autour d'un axe et comportant une cage formée d'une seule pièce avec une portion d'arbre qui s'étend coaxialement à l'extérieur de la cage, la cage comportant deux flasques annulaires dont un, appelé premier flasque, est situé du côté de ladite portion d'arbre, les flasques s'étendant radialement par rapport audit axe et étant reliés entre eux par des ponts de matière qui s'étendent axialement, la cage comportant en outre une paroi interne tubulaire qui s'étend à l'intérieur de la cage et dans le prolongement axial de ladite portion d'arbre, depuis ledit premier flasque, lesdits ponts de matière définissant entre eux et avec les flasques des logements configurés pour recevoir des satellites, ces logements comportant chacun une première partie qui est située du côté dudit premier flasque, et une seconde partie qui est située du côté de l'autre flasque et qui débouche radialement à l'intérieur de ladite paroi, les ponts de matière s'étendant radialement depuis ladite paroi jusqu'à la périphérie externe desdits flasques, caractérisé en ce qu'il comprend en outre une gorge annulaire ouverte qui est formée dans le premier flasque et qui s'étend axialement jusque dans lesdits ponts de matière selon une distance axiale, cette gorge s'étendant autour de ladite portion d'arbre et en regard de ladite paroi et débouchant axialement du côté de cette portion d'arbre.

La gorge est positionnée et dimensionnée de façon à adapter le chemin d'efforts dans le porte-satellites depuis la portion d'arbre, jusqu'aux satellites. Les efforts sont transmis à la portion d'arbre, par exemple par un arbre de turbine, et transitent dans ce dernier jusqu'au niveau du premier flasque. La gorge empêche la transmission de ces efforts directement au premier flasque, ce qui risquerait d'entraîner des basculements et donc des désalignements des satellites. Les efforts sont obligés de transiter radialement à l'intérieur de la gorge, par la paroi, jusqu'aux ponts de matière puis aux flasques. Les efforts parviennent ainsi jusqu'aux flasques par l'intermédiaire du centre de la cage. Les efforts sont ainsi mieux répartis et en particulier recentrés de façon à ce qu'un flasque ne soit pas plus chargé que l'autre flasque.

Cette invention est compatible :
- d'un réducteur double étage épicycloïdal (à porte-satellites tournant) ;
- d'un porte-satellites monobloc ;
- de tout type de denture (droite, hélicoïdale ou en chevrons) ;
- de paliers hydrodynamiques et/ou à éléments roulants.

Le porte-satellites selon l'invention peut comprendre une ou plusieurs des caractéristiques suivantes, prises isolément les unes des autres, ou en combinaison les unes avec les autres :
- la gorge a en section une forme en U, C ou V ;
- la gorge a un diamètre interne qui correspond au diamètre externe de ladite paroi, et un diamètre externe qui est supérieur au diamètre externe maximal de ladite portion d'arbre ;
- ladite distance axiale représente entre 10 et 50%, et de préférence entre 20 et 40%, de la dimension axiale de la cage mesurée entre lesdits flasques ;
- la gorge débouche dans lesdits logements, et en particulier dans la première partie de chacun de ces logements ;
- ladite paroi comprend une surface cylindrique interne de montage d'un palier ;
- lesdits flasques comprennent des orifices configurés pour monter des paliers de guidage desdits satellites ;
- lesdits logements débouchent radialement vers l'extérieur.

L'invention concerne en outre un réducteur mécanique pour une turbomachine d'aéronef, ce réducteur comportant un porte-satellites tel que décrit ci-dessus, des satellites à deux étages d'engrènement qui sont logés dans lesdits logements, et un solaire qui est logé à l'intérieur de ladite paroi de la cage et qui est engrené avec l'un des étages de chaque satellite.

La présente invention concerne encore une turbomachine d'aéronef, comportant un porte-satellites ou un réducteur tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine d'aéronef,
[Fig.2] la figure 2 est une section axiale en vue partielle d'un réducteur mécanique,
[Fig.3] la figure 3 est une vue en coupe axiale d'un réducteur mécanique équipé de satellites à double étage d'engrènement, et illustre la technique antérieure à l'invention,
[Fig.4] la figure 4 est une vue en perspective du porte-satellites du réducteur de la figure 3,
[Fig.5] la figure 5 est une vue en coupe axiale et en perspective du porte-satellites du réducteur de la figure 3,
[Fig.6] la figure 6 est une vue en coupe axiale d'un réducteur mécanique équipé de satellites à double étage d'engrènement, et illustre l'invention,
[Fig.7] la figure 7 est une vue en perspective du porte-satellites du réducteur de la figure 6, et
[Fig.8] la figure 8 est une vue en coupe axiale et en perspective du porte-satellites du réducteur de la figure 6.

### Description détaillée de l'invention

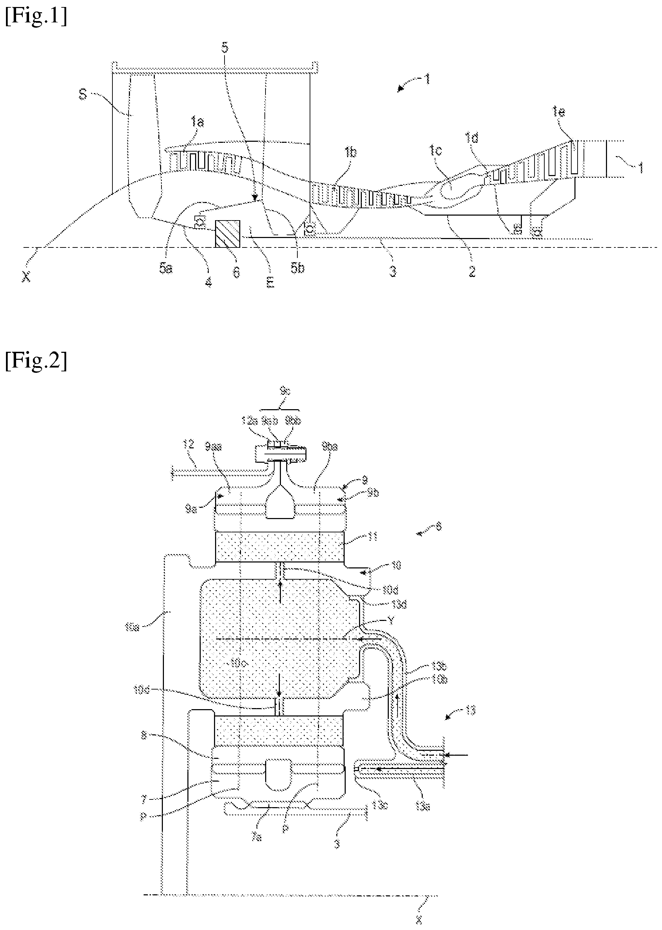

La figure 1 décrit une turbomachine 1 qui comporte, de manière classique, un axe de rotation X, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

La description qui suit concerne un réducteur du type planétaire dans lequel la couronne est mobile en rotation.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des étanchéités au niveau d'un palier permettant la traversée de l'arbre de soufflante 4, et en aval par des joints au niveau de la traversée de l'arbre BP 3.

La figure 2 montre un réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenus par un châssis appelé porte-satellites 10. Chaque satellite 8 tourne autour de son propre axe Y, et engrène avec la couronne 9.
▪ Dans cette configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange les axes 10b et le châssis 10a peuvent être séparés en plusieurs pièces.

Pour les mêmes raisons citées précédemment, la denture d'un réducteur peut être séparée en plusieurs hélices présentant chacun un plan médian P. Dans l'exemple représenté, la couronne est séparée en deux demi-couronnes:
▪ une demi-couronne amont 9a constituée d'une jante 9aa et d'une demi-bride de fixation 9ab. Sur la jante 9aa se trouve l'hélice amont de la denture du réducteur. Cette hélice amont engrène avec celle du satellite 8 qui engrène avec celle du solaire 7.
▪ une demi-couronne aval 9b constituée d'une jante 9ba et d'une demi-bride de fixation 9bb. Sur la jante 9ba se trouve l'hélice aval de la denture du réducteur. Cette hélice aval engrène avec celle du satellite 8 qui engrène avec celle du solaire 7.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur est séparé en 2 parties en général chacune répétée du même nombre de satellite. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

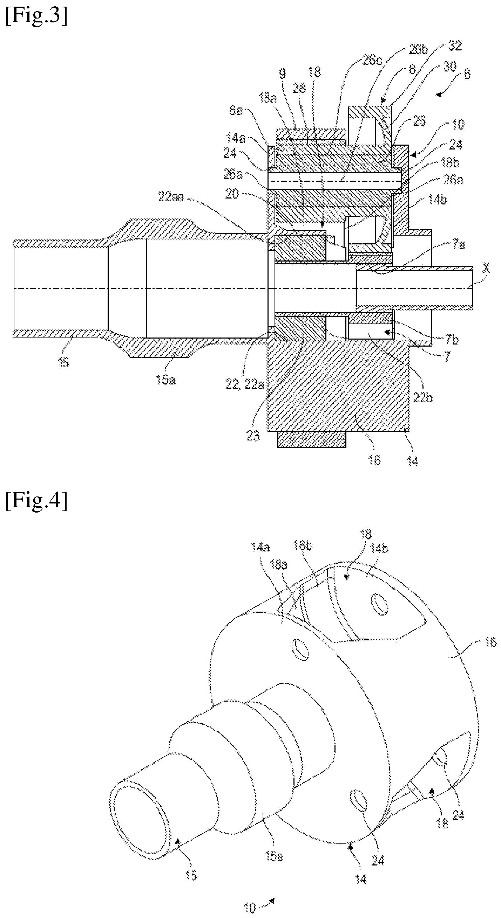

Les figures 3 à 5 représentent un réducteur 6 de turbomachine d'aéronef selon la technique antérieure.

Le réducteur 6 comprend un porte-satellites 10 qui est configuré pour être mobile en rotation autour de l'axe X et qui est du type monobloc, c'est-à-dire formé d'une seule pièce.

Ce porte-satellites 10 comprend une cage 14 et une portion d'arbre 15.

La portion d'arbre 15 a une forme générale tubulaire et allongée le long de l'axe X et comprend une extrémité longitudinale libre, ici à gauche sur les dessins, et une extrémité longitudinale opposée de liaison à la cage 14.

La portion d'arbre 15 comprend une denture externe 15a d'engrènement, par exemple avec une soufflante.

La cage 14 comporte deux flasques annulaires 14a, 14b qui sont parallèles et à distance l'un de l'autre et s'étendent perpendiculairement à l'axe X. Les flasques 14a, 14b ont une forme générale circulaire et sont centrées sur l'axe X.

Le flasque 14a, appelé premier flasque, à gauche sur le dessin, est relié à la portion d'arbre 15. L'autre flasque 14b est appelé second flasque.

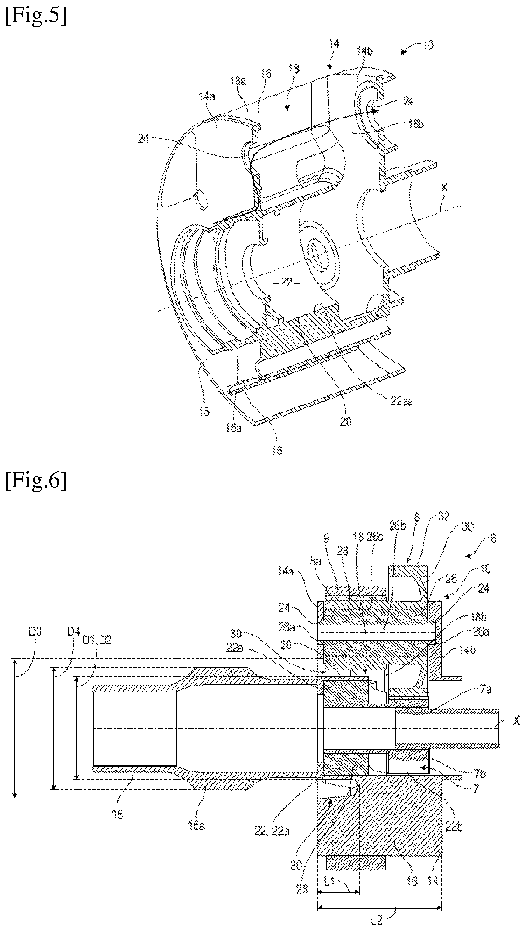

Les flasques 14a, 14b sont reliés entre eux par des ponts de matière 16 qui définissent entre eux et avec les flasques des logements 18 configurés pour recevoir les satellites 8. Les logements 18 débouchent radialement vers l'extérieur à la périphérie externe de la cage 14, et débouchent également radialement à l'intérieur en traversant une paroi tubulaire interne 20 de la cage 14. Les ponts de matière 16 peuvent être pleins ou en partie évidés, comme illustré à la figure 5.

La paroi 20 s'étend autour de l'axe X, depuis le premier flasque 14a en direction du second flasque 14b. Elle s'étend ici sensiblement dans le prolongement axial de la portion d'arbre 15. Cette paroi 20 délimite intérieurement un espace 22 de logement du solaire 7.

Cet espace 22 comprend deux parties adjacentes. La première partie 22a est entourée par la paroi 20 qui comprend une surface cylindrique interne 22a de montage d'un palier 23 de guidage d'une extrémité du solaire 7. La seconde partie 22b, située au niveau des débouchés des logements 18, reçoit l'extrémité opposée du solaire 7, qui comprend une denture externe 7b d'engrènement avec les satellites 8. Le solaire 7 comprend en outre une denture interne 7a d'accouplement à un arbre par exemple de turbine.

Les logements 18 comportent chacun une première partie 18a qui est située du côté du premier flasque 14a, et une seconde partie 18b qui est située du côté du second flasque 14b. Les logements 18 débouchent à la périphérie externe de la cage 14, au niveau de ses deux parties 18a, 18b, et à la périphérie interne de la cage 14, au niveau des secondes parties 18b seulement.

Les flasques 14a, 14b comprennent des trous ou orifices 24 alignés de montage des satellites 8 et en particulier de paliers lisses 26 de ces satellites 8. Chaque palier 26 a une forme générale cylindrique qui s'étend parallèlement à l'axe X et dont les extrémités longitudinales comprennent des extensions 26a logées dans les orifices 24 formant des sièges.

De façon connue, chaque palier 26 peut comprendre un alésage interne 26b de circulation d'huile qui communique en général avec des conduits d'amenée d'huile jusqu'à la surface cylindrique externe 26c du palier en vue de la formation d'un film d'huile sur cette surface 26c.

Les satellites 8 sont du type à double étage d'engrènement, comme évoqué dans ce qui précède, et comprennent chacun un corps tubulaire 8a équipé d'une première denture 28 externe et relié par un voile 30 à une seconde denture 32 externe.

Les dentures 28, 32 sont disposées à côté l'une de l'autre et plus particulièrement sont situées respectivement dans deux plans perpendiculaires à l'axe X.

La première denture 28, située à gauche sur les dessins, est située du côté du premier flasque 14a et donc au niveau de la première partie 18a du logement. Comme cela est visible à la figure 3, cette denture 28 est engrenée avec la couronne 9.

La seconde denture 32, située à droite sur les dessins, est située du côté du second flasque 14b et donc au niveau de la seconde partie 18b du logement. Comme cela est visible à la figure 3, cette denture 32 est engrenée avec la denture 7b du solaire 7.

Comme on le voit à la figure 3, les ponts de matière 16 s'étendent radialement, entre les logements 18, depuis la paroi 20 et la périphérie interne des flasques 14a, 14b jusqu'à la périphérie externe des flasques.

On a représenté à la figure 5 le cheminement de la reprise des efforts en fonctionnement entre la turbine et le porte-satellites. Les efforts transitent d'abord par la portion d'arbre 15 puis parviennent jusqu'au flasque amont 14a. Ils passent alors par le flasque amont 14a pour transiter à travers les paliers 26 et les satellites 8. Cette transmission des efforts par l'intermédiaire d'un des flasques risque d'entraîner un basculement des satellites 8 et donc des désalignements entre leurs dentures 28, 32 et celles du solaire 7 et de la couronne 9.

L'invention propose de remédier à ce problème sans rigidification du porte-satellites. Au contraire, l'invention consiste à prévoir une gorge annulaire dans le porte-satellites qui est dimensionnée et positionnée de façon à forcer les efforts à transiter par les deux flasques.

Les figures 6 à 8 illustrent un mode de réalisation d'un porte-satellites 10 comportant une telle gorge 30. La gorge 30 est formée dans le premier flasque 14a et dans les ponts de matière 16. Elle s'étend autour de la portion d'arbre 15 et de la paroi 20 et débouche axialement du côté de cette portion d'arbre 15.

Dans l'exemple représenté, la gorge 30 a en section une forme en U, C ou V.

La gorge 30 a un diamètre interne D1 qui est sensiblement égal au diamètre externe D2 de la paroi, et un diamètre externe D3 qui est supérieur au diamètre externe maximal D4 de la portion d'arbre 15. Le diamètre D4 correspond à celui du filetage 15a.

La gorge 30 s'étend sur une distance axiale L1 représentant entre 10 et 50%, et de préférence entre 20 et 40%, de la dimension axiale L2 de la cage 14 mesurée entre les flasques 14a, 14b.

La gorge 30 débouche dans les logements 18, et en particulier dans la première partie 18a de chacun de ces logements 18.

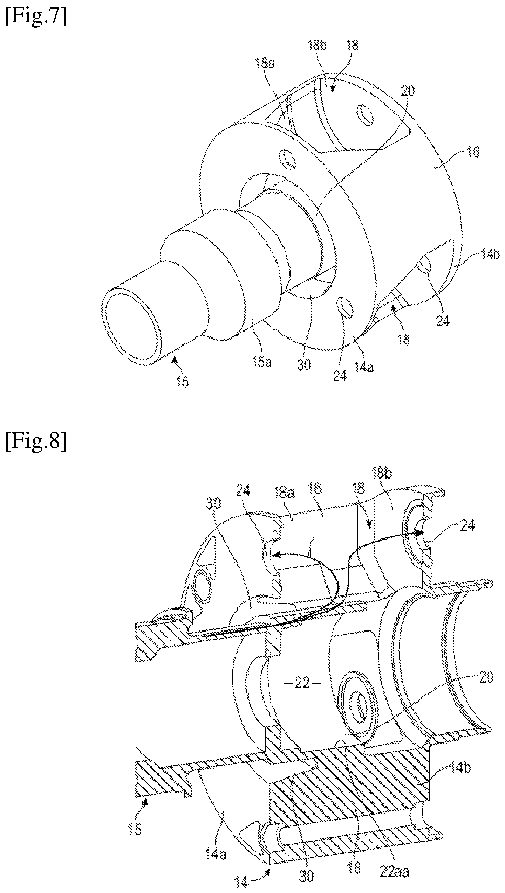

On a représenté à la figure 8 le cheminement de la reprise des efforts en fonctionnement entre la turbine et le porte-satellites. Les efforts transitent d'abord par la portion d'arbre 15 puis parviennent jusqu'au flasque amont 14a. Ils passent alors par la paroi 20, du fait de la présence de la gorge 30, puis transitent par les ponts de matière 16 jusqu'aux flasques 14a, 14b où ils sont ainsi sensiblement répartis de manière égale. Le risque de basculement et donc de désalignement des satellites est donc fortement limité.

## Revendications

1. Porte-satellites (10) pour un réducteur mécanique (6) de turbomachine (1), en particulier d'aéronef, ce porte-satellites étant configuré pour être un organe mobile en rotation du réducteur autour d'un axe (X) et comportant une cage (14) formée d'une seule pièce avec une portion d'arbre (15) qui s'étend coaxialement à l'extérieur de la cage, la cage comportant deux flasques (14a, 14b) annulaires dont un, appelé premier flasque (14a), est situé du côté de ladite portion d'arbre (15), les flasques (14a, 14b) s'étendant radialement par rapport audit axe et étant reliés entre eux par des ponts de matière (16) qui s'étendent axialement, la cage (14) comportant en outre une paroi (20) interne tubulaire qui s'étend à l'intérieur de la cage (14) et dans le prolongement axial de ladite portion d'arbre (15), depuis ledit premier flasque (14a), lesdits ponts de matière (16) définissant entre eux et avec les flasques (14a, 14b) des logements (18) configurés pour recevoir des satellites (8), ces logements (18) comportant chacun une première partie (18a) qui est située du côté dudit premier flasque (14a), et une seconde partie (18b) qui est située du côté de l'autre flasque (14b) et qui débouche radialement à l'intérieur de ladite paroi (20), les ponts de matière (16) s'étendant radialement depuis ladite paroi (20) jusqu'à la périphérie externe desdits flasques (14a, 14b), **caractérisé en ce qu'**il comprend en outre une gorge (30) annulaire ouverte qui est formée dans le premier flasque (14a) et qui s'étend axialement dans lesdits ponts de matière (16) selon une distance axiale (L1), cette gorge (30) s'étendant autour de ladite portion d'arbre (15) et en regard de ladite paroi (20) et débouchant axialement du côté de cette portion d'arbre (15).

2. Porte-satellites (10) selon la revendication 1, dans lequel la gorge (30) a en section une forme en U, C ou V.

3. Porte-satellites (10) selon la revendication 1 ou 2, dans lequel la gorge (30) a un diamètre interne (D1) qui correspond au diamètre externe (D2) de ladite paroi (20), et un diamètre externe (D3) qui est supérieur au diamètre externe maximal (D4) de ladite portion d'arbre (15).

4. Porte-satellites (10) selon l'une des revendications précédentes, dans lequel ladite distance axiale (L1) représente entre 10 et 50%, et de préférence entre 20 et 40%, de la dimension axiale (L2) de la cage (14) mesurée entre lesdits flasques (14a, 14b).

5. Porte-satellites (10) selon l'une des revendications précédentes, dans lequel la gorge (30) débouche dans lesdits logements (18), et en particulier dans la première partie (18a) de chacun de ces logements (18).

6. Porte-satellites (10) selon l'une des revendications précédentes, dans lequel ladite paroi (20) comprend une surface cylindrique interne (22a) de montage d'un palier (23).

7. Porte-satellites (10) selon l'une des revendications précédentes, dans lequel lesdits flasques (14a, 14b) comprennent des orifices (24) configurés pour monter des paliers (26) de guidage desdits satellites (8).

8. Porte-satellites (10) selon l'une des revendications précédentes, dans lequel lesdits logements (18) débouchent radialement vers l'extérieur.

9. Réducteur mécanique (6) pour une turbomachine d'aéronef, ce réducteur comportant un porte-satellites (10) selon l'une des revendications précédentes, des satellites (8) à deux étages d'engrènement qui sont logés dans lesdits logements (18), et un solaire (7) qui est logé à l'intérieur de ladite paroi (20) de la cage et qui est engrené avec l'un des étages de chaque satellite.

10. Turbomachine d'aéronef, comportant un porte-satellites (10) selon l'une des revendications 1 à 8 ou un réducteur selon la revendication 9.

## Patentansprüche

1. Satellitenträger (10) für ein Planetengetriebe (6) eines Turbotriebwerks (1), insbesondere eines Luftfahrzeugs, wobei der Satellitenträger als ein um eine Achse (X) drehbares Bauteil des Getriebes ausgebildet ist und einen Käfig (14) umfasst, der als einteiliges Werkstück mit einem Wellenabschnitt (15) ausgebildet ist, der koaxial vom Käfig nach außen absteht, wobei der Käfig zwei ringförmige Flansche (14a, 14b) umfasst, von denen einer, als erster Flansch (14a) bezeichnet, auf der Seite des besagten Wellenabschnitts (15) angeordnet ist, wobei sich die Flansche (14a, 14b) radial in Bezug auf die besagte Achse erstrecken und durch Materialstege (16) miteinander verbunden sind, die sich axial erstrecken, wobei der Käfig (14) weiter eine innere, rohrförmige Wand (20) umfasst, die sich im Inneren des Käfigs (14) und in der axialen Verlängerung des besagten Wellenabschnitts (15) von dem besagten ersten Flansch (14a) aus erstreckt, wobei die besagten Materialstege (16) untereinander und mit den Flanschen (14a, 14b) Gehäuse (18) definieren, die zur Aufnahme von Planetenrädern (8) ausgebildet sind, wobei diese Gehäuse (18) jeweils einen ersten Abschnitt (18a), der auf der Seite des besagten ersten Flansches (14a) liegt, und einen zweiten Abschnitt (18b), der auf der Seite des anderen Flansches (14b) liegt und radial in das Innere der besagten Wand (20) mündet, umfassen, wobei sich die Materialstege (16) radial von der besagten Wand (20) bis zur äußeren Umfangsseite der besagten Flansche (14a, 14b) erstrecken, **dadurch gekennzeichnet, dass** er weiter eine offene ringförmige Nut (30) umfasst, die in den ersten Flansch (14a) eingebracht ist und sich axial in die besagten Materialstege (16) über einen axialen Abstand (L1) erstreckt, wobei sich diese Nut (30) um den besagten Wellenabschnitt (15) erstreckt und axial gegenüber der besagten Wand (20) liegt und auf der Seite dieses Wellenabschnitts (15) axial öffnet.

2. Satellitenträger (10) nach Anspruch 1, wobei die Nut (30) im Querschnitt eine U-, C- oder V-Form aufweist.

3. Satellitenträger (10) nach Anspruch 1 oder 2, wobei die Nut (30) einen Innendurchmesser (D1) aufweist, der dem Außendurchmesser (D2) der besagten Wand (20) entspricht, und einen Außendurchmesser (D3), der größer als der maximale Außendurchmesser (D4) des besagten Wellenabschnitts (15) ist.

4. Satellitenträger (10) nach einem der vorstehenden Ansprüche, wobei der besagte axiale Abstand (L1) zwischen 10 % und 50 %, und vorzugsweise zwischen 20 % und 40 %, der axialen Abmessung (L2) des Käfigs (14), gemessen zwischen den besagten Flanschen (14a, 14b), beträgt.

5. Satellitenträger (10) nach einem der vorstehenden Ansprüche, wobei die Nut (30) in die besagten Gehäuse (18), und insbesondere in den ersten Abschnitt (18a) eines jeden dieser Gehäuse (18), mündet.

6. Satellitenträger (10) nach einem der vorstehenden Ansprüche, wobei die besagte Wand (20) eine innere zylindrische Montagefläche (22a) für ein Lager (23) umfasst.

7. Satellitenträger (10) nach einem der vorstehenden Ansprüche, wobei die besagten Flansche (14a, 14b) Öffnungen (24) umfassen, die konfiguriert sind, Lager (26) zur Führung der besagten Planetenräder (8) aufzunehmen.

8. Satellitenträger (10) nach einem der vorstehenden Ansprüche, wobei die besagten Gehäuse (18) radial nach außen münden.

9. Planetengetriebe (6) für ein Turbotriebwerk eines Luftfahrzeugs, wobei das Getriebe einen Satellitenträger (10) nach einem der vorstehenden Ansprüche, Planetenräder (8) mit zwei Verzahnungsstufen, die in den besagten Gehäusen (18) untergebracht sind, und ein Sonnenrad (7) umfasst, das innerhalb der besagten Wand (20) des Käfigs untergebracht und mit einer der Stufen jedes Planetenrades im Eingriff ist.

10. Turbotriebwerk eines Luftfahrzeugs, umfassend einen Satellitenträger (10) nach einem der Ansprüche 1 bis 8 oder ein Getriebe nach Anspruch 9.

## Claims

1. A planet carrier (10) for a mechanical reduction gear (6) of a turbomachine (1), in particular for an aircraft, this planet carrier being configured to be a rotating member of the reduction gear about an axis (X) and comprising a cage (14) formed in one piece with a shaft portion (15) which extends coaxially outside the cage, the cage comprising two annular flanges (14a, 14b), one of which, called the first flange (14a), is located on the side of said shaft portion (15), the flanges (14a, 14b) extending radially with respect to said axis and being connected to each other by bridges of material (16) which extend axially, the cage (14) further comprising a tubular internal wall (20) which extends inside the cage (14) and in the axial extension of said shaft portion (15), from said first flange (14a), said bridges of material (16) defining between them and with the flanges (14a, 14b) housings (18) configured to receive planet gears (8), these housings (18) each comprising a first part (18a) which is located on the side of said first flange (14a), and a second part (18b) which is located on the side of the other flange (14b) and which opens radially inside said wall (20), the bridges of material (16) extending radially from said wall (20) to the external periphery of said flanges (14a, 14b), **characterized in that** it further comprises an open annular groove (30) which is formed in the first flange (14a) and extending axially into said bridges of material (16) by an axial distance (L1), this groove (30) extending around said shaft portion (15) and opposite said wall (20) and opening axially on the side of this shaft portion (15).

2. The planet carrier (10) according to claim 1, wherein the groove (30) has a U, C or V shape in cross-section.

3. The planet carrier (10) according to claim 1 or 2, wherein the groove (30) has an internal diameter (D1) that corresponds to the external diameter (D2) of said wall (20), and an external diameter (D3) that is greater than the maximum external diameter (D4) of said shaft portion (15).

4. The planet carrier (10) according to one of the preceding claims, wherein said axial distance (L1) represents between 10 and 50%, and preferably between 20 and 40%, of the axial dimension (L2) of the cage (14) measured between said flanges (14a, 14b).

5. The planet carrier (10) according to one of the preceding claims, wherein the groove (30) opens into said housings (18), and in particular into the first part (18a) of each of these housings (18).

6. The planet carrier (10) according to one of the preceding claims, wherein said wall (20) comprises an internal cylindrical surface (22a) for mounting a bearing (23).

7. The planet carrier (10) according to one of the preceding claims, wherein said flanges (14a, 14b) comprise orifices (24) configured to mount bearings (26) for guiding said planet gears (8).

8. The planet carrier (10) according to one of the preceding claims, wherein said housings (18) open radially outward.

9. A mechanical reduction gear (6) for an aircraft turbomachine, this reduction gear comprising a planet carrier (10) according to one of the preceding claims, two-stage meshing planet gears (8) which are housed in said housings (18), and a sun gear (7) which is housed inside said wall (20) of the cage and which meshes with one of the stages of each planet gear.

10. An aircraft turbomachine, comprising a planet carrier (10) according to one of claims 1 to 8 or a reduction gear according to claim 9.
